# EUROPÄISCHE PATENTSCHRIFT

(11) **EP 2 305 526 B1**
(45) Veröffentlichungstag und Bekanntmachung des Hinweises auf die Patenterteilung: **17.10.2012**
(21) Anmeldenummer: 10010269.8
(22) Anmeldetag: 23.09.2010
(51) Int. Cl.: B60T 17/22, G01L 5/22, G01L 5/28, G01M 17/007, G05G 1/54

(54) **Aktuatorvorrichtung**
Actuating device
Dispositiv actionneur

(30) Priorität: 02.10.2009 DE 102009048181
(43) Veröffentlichungstag der Anmeldung: 06.04.2011
(73) Patentinhaber: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver

(56) Entgegenhaltungen:
- EP-A1- 0 235 333
- EP-A1- 0 618 121
- EP-A1- 1 203 939
- EP-A2- 1 892 514
- DE-A1- 4 230 044
- DE-A1-102004 041 174
- FR-A1- 2 793 204
- US-A- 3 713 332

## Beschreibung

Die Erfindung betrifft eine Aktuatorvorrichtung zur Betätigung wenigstens eines Fußpedals eines Kraftfahrzeuges nach dem Oberbegriff des Anspruchs 1. Diese Aktuatorvorrichtung weist wenigstens ein Betätigungselement auf, das mittels eines Stellmotors angetrieben werden kann, um das betreffende Fußpedal zu beaufschlagen. Zudem weist die Aktuatorvorrichtung ein Trägerelement auf, an dem das wenigstens eine Betätigungselement und der Stellmotor gelagert sind. Ferner sind Befestigungsmittel für die Festlegung des Trägerelementes an einem Fahrzeugboden vorgesehen.

Derartige Aktuatorvorrichtungen werden benötigt, um beispielsweise Funktions- und Dauertests der Fußpedale eines Kraftfahrzeuges durchzuführen oder das Fahrzeug automatisiert beziehungsweise teilautomatisiert zu fahren. Hierbei führt die Aktuatorvorrichtung wiederkehrende Bewegungsabläufe zur Beaufschlagung der Fußpedale aus, die der tatsächlichen Betätigung der Fußpedale bei dem zu erwartenden Gebrauch des Fahrzeuges weitestgehend entsprechen.

Aus DE 2 004 979 A ist eine Aktuatorvorrichtung bekannt, die an Stelle eines Fahrzeugsitzes in das jeweilige Fahrzeug eingebaut werden kann. Hierzu weist die Aktuatorvorrichtung einen Grundrahmen auf, auf dem alle Verteiler- und Steuerungsgeräte einschließlich Servomotoren und Ihrer Widerlager befestigt sind. Zur Festlegung des Grundrahmens am Fahrzeugboden sind an diesem Führungsschienen vorgesehen, die an das Profil einer am Fahrzeugboden befestigten Sitzführungsschiene angepasst sind. Zudem kann eine entlang der Sitzführungsschienen eingenommene Position des Grundrahmens mittels einer Rasteinrichtung gesichert werden, die üblicherweise zur Fixierung einer Sitzposition dient.

Nachteilig an der bekannten Aktuatorvorrichtung ist, dass vor deren Einbau in ein Fahrzeug zunächst dessen Fahrersitz ausgebaut werden muss. Zudem kann eine derartige Aktuatorvorrichtung wegen der benötigten Anpassung der Führungsschienen an die Ausführungform und Anordnung der fahrzeugseitigen Sitzführungsschienen lediglich für Fahrzeuge mit übereinstimmender Sitzbefestigung verwendet werden.

In US 3,977,241 A wird eine Aktuatorvorrichtung zum Betätigen des Gaspedals oder des Bremspedals beim Prüfen von Kraftfahrzeugen offenbart, die am Boden des Fahrzeugs im Bereich zwischen dem Fahrersitz und den Fußpedalen angeordnet ist. Die Aktuatorvorrichtung umfasst ein pneumatisches Stellglied und ein direkt auf die Fußpedale wirkendes Betätigungselement, die auf einem Trägerelement montiert sind. Dabei enthält die Aktuatorvorrichtung einen Positionierungsmechanismus mit einer ausziehbaren justierbaren Lagerplatte zum Einrasten bis zum Fußblech.

In US 4,621,525 A ist eine Aktuatorvorrichtung zum Betätigen der Fußpedale für ein automatisches Fahrsystem offenbart, die aus einem mechanischen und einem elektronischen Teil zur Steuerung des mechanischen Teils besteht. Die gesamte Aktuatorvorrichtung umfasst eine elektronische Steuereinheit, einen mit dem Tachometer gekoppelten Stellmotor, ein Betätigungselement und eine Gewindespindel zur Transformation der Rotationsbewegung in eine lineare Bewegung des Betätigungselementes, das unmittelbar auf das Fahrpedal wirkt, und einen Sensor zum Detektieren des Kontaktes zwischen dem Fahrpedal und dem Betätigungselement. Dabei ist der elektronische Teil außerhalb des Fahrzeugs und der mechanische Teil der Aktuatorvorrichtung im Fahrzeugraum zwischen den Fußpedalen und dem Fahrersitz am Fahrzeugboden angeordnet. Der mechanische Teil der Aktuatorvorrichtung ist an einer Lagerplatte auf dem Fahrzeugboden angeordnet und durch eine Aufspanneinrichtung zwischen dem Armaturbrett und der Lagerplatte eingeklemmt. Zur Einstellung des Kontaktes zum Fahrpedal ist dabei auf der Lagerplatte auch eine Justiervorrichtung vorgesehen.

In JP 2009 204 544 A ist eine Aktuatorvorrichtung zum Testen der Bremseigenschaften eines Fahrzeugs offenbart, die entsprechende Baugruppen zum Betätigen des Bremspedals und ein als Pneumatik- oder Hydraulikzylinder oder ein als Motor ausgeführtes Antriebselement umfasst, die auf einem Trägerelement gelagert sind. Das Träegerelement ist am Fahrzeugboden zwischen dem Fahrersitz und den Fußepedalen angeordnet und durch entsprechende Befestigungsmittel mit Einstellmöglichkeit fixiert. Dabei ist das Trägerelement der Aktuatorvorrichtung am Fahrersitz befestigt.

In DE 42 40756 A1 ist eine Aktuatorvorrichtung als ein Teil eines Fahrroboters zum Betreiben eines Kraftfahrzeuges offenbart. Die Aktuatorvorrichtung weist ein Stellglied zum Betätigen jeweils eines der Fußpedale auf und ist am Roboterkörper mittels einer Installationsstange und eines Haltestabs befestigt. Ein pedalbedienendes Stellglied weist ein am Haltestab angebrachtes Halterohr auf, das einen Gleitarm beinhaltet, der vorgeschoben oder zurückgeschoben werden kann. Der Roboterkörper wird auf dem Fahrersitz aufgesetzt und mit diesem durch ein Befestigungsmittel so verbunden, dass der Haltestab vor dem Fahrersitz übersteht und durch ein Stützbein am Fahrzeugboden abgestützt wird.

Die Aufgabe der Erfindung ist es, bei einer gattungsgemäßen Aktuatorvorrichtung die genannten Nachteile zu vermeiden und einen einfacheren und variableren Einbau zu ermöglichen.

Diese Aufgabe wird durch eine Aktuatorvorrichtung mit den Merkmalen des Anspruchs 1 gelöst. Dabei weisen die Befestigungsmittel eine an einem Fahrzeugboden festlegbare Lagerplatte auf. An dieser Lagerplatte sind Formschlussgegenmittel vorgesehen, die mit Formschlussmitteln verbunden und wieder von diesen getrennt werden können, die am Trägerelement vorgesehen sind. Hierdurch kann beim Einbau zunächst die Lagerplatte ohne die übrige Aktuatorvorrichtung in das Fahrzeug eingesetzt und fixiert werden. Anschließend kann dann die übrige Aktuatorvorrichtung auf die Trägerplatte aufgesetzt und durch formschlüssige Verbindung des Trägerelementes mit der Lagerplatte ebenfalls am Fahrzeug fixiert werden. Hierdurch kann die Montage der Aktuatorvorrichtung wesentliche vereinfacht werden, wobei durch die Herstellung des Formschlusses zudem eine besonders stabile Festlegung der Aktutorvorrichtung gewährleistet werden kann.

### Einschub:

EP 1 203 939 A1 zeigt eine Aktuatorvortichtung für Fahrzeugpedale, die eine Montageplatte vorsieht, die zur schwenkbaren Aufnahme der Betätigungselemente dient und die im Fußraum des betreffenden Fahrzeugs abstellbar ist.

DE 42 30 044 A1 beschreibt einen Fahrroboter, der auf dem Fahrersitz platziert und über mehrere Haken und Spannmittel mit diesem verbunden wird.

Die Vorrichtung gemäß EP 1 892 514 A2 weist eine über dem Fahrersitz angeordnete Grundplatte zur Aufnahme eines Fahrroboters auf, die über höhenverstellbare Tragelemente mit einer längenverstellbaren Adapterplatte verbunden ist. Diese Adapterplatte kann mit Sitzschienen des Fahrzeugsitzes hakenähnlich in Eingriff gebracht werden.

EP 0 235 333 A1 beschreibt ein Gerätegehäuse mit einer größtmöglichen Grundplatte, an der mehrere Füße vorgesehen sind, um sie stabil auf dem Boden im Fußraum eines Fahrzeuges abstellen zu können.

In einer besonders vorteilhaften Ausführungsform sind die Formschlussgegenmittel in einer größeren Zahl vorgesehen als die Formschlussmittel, wobei die Formschlussmittel in wenigstens zwei unterschiedlichen Positionen an den Formschlussgegenmitteln festlegbar sind. Durch eine derartige Mehrzahl an Formschlussgegenmitteln können mehrere Aufnahmepositionen der Formschlussmittel vorbestimmt werden, wodurch die Aktuatorvorrichtung auch noch nach Einbau der Lagerplatte in einer von mehreren möglichen Positionen gegenüber dem wenigstens einen Fußpedal angeordnet werden kann, die für die vorgesehene Anwendung besonders geeignet erscheint.

Zudem ist es günstig, wenn die Formschlussmittel und Formschlussgegenmittel durch Steckmittel und Gegensteckmittel einer Steckverbindung gebildet sind, wodurch eine besonders einfache und schnelle Herstellung des Formschlusses zwischen dem Trägerelement und der Lagerplatte ermöglicht wird.

Vorteilhafterweise sind die Steckmittel durch trägerelementseitige Zapfen und die Gegensteckmittel durch lagerplattenseitige Ausnehmungen gebildet, in denen die Zapfen formschlüssig aufgenommen werden können. Hierdurch können die Formschlussmittel und Formschlussgegenmittel kostengünstig hergestellt werden.

In einer alternativen Ausführungsform sind die Formschlussmittel und Formschlussgegenmittel durch Schraubmittel und Gegenschraubmittel einer Schraubverbindung gebildet, wodurch eine besonders stabile und vollständige Festlegung des Trägerelementes an der Lagerplatte möglich ist.

Vorteilhafterweise sind dabei die Schraubmittel durch trägerelementseitige Gewindebolzen und die Gegenschraubmittel durch lagerplattenseitige Gewindebohrungen gebildet, in denen die Gewindebolzen aufnehmbar sind. Hierdurch können die Schraubmittel und Gegenschraubmittel kostengünstig hergestellt werden

Zudem ist es günstig, wenn die Lagerplatte wenigstens bereichsweise durch ein Lochblech gebildet ist. Auf diese Weise können die trägerelementseitigen Formschlussmittel in besonders vielen verschiedenen Positionen an der Lagerplatte befestigt werden.

Ferner ist es günstig, wenn die Aktuatorvorrichtung in ihren Außenabmessungen derart begrenzt ist, dass sie in den Fußraum zwischen Fahrersitz und Fußpedalen eines handelsüblichen Kraftfahrzeuges einsetzbar ist. Auf diese Weise kann der Fahrersitz während des Einbau und Betriebes der Aktuatorvorrichtung im Fahrzeug verbleiben, wodurch der Montageaufwand minimiert werden kann.

Vorteilhafterweise weist die Lagerplatte einen Bodenabschnitt für die Ablage auf dem Fahrzeugboden und einen Stützabschnitt für die Anlage an einem Fahrzeugsitz auf. Der Stützabschnitt ragt dabei quer zum Bodenabschnitt schräg nach oben von diesem ab. Auf diese Weise kann sich die Aktuatorvorrichtung während des Betriebs des wenigstens einen Betätigungselementes an der von dem betreffenden Fußpedal abgewandten Seite gegen den Fahrzeugsitz abstützen, wodurch die Position der Aktuatorvorrichtung zusätzlich gesichert ist. Um dabei die Position der Lagerplatte zusätzlich zu sichern kann diese zudem eine an den Fußraum der betreffenden Fahrzeuge angepasste Form oder zusätzliche Fixiermittel aufweisen.

In einer weiteren vorteilhaften Ausführungsform sind die Formschlussmittel wenigstens teilweise hakenförmig ausgebildet, um die Formschlussgegenmittel beziehungsweise das Bauteil, an dem die Formschlussgegenmittel vorgesehen sind, zu hintergreifen. Auf diese Weise sind das Trägerelement und die Lagerplatte nicht nur in paralleler Richtung sondern auch in Normalenrichtung aneinander formschlüssig festlegbar. Hierdurch kann im Betrieb der Aktuatorvorrichtung ein Abheben des Trägerelementes von der Lagerplatte vermieden werden.

Dabei ist es günstig, wenn wenigstens eines der hakenförmigen Formschlussmittel am Trägerelement oder an der Lagerplatte verlagerbar gehalten ist, um über dieses eine verriegelte beziehungsweise eine entriegelte Stellung zwischen dem Trägerelement und der Lagerplatte einstellen zu können.

Dabei ist es in jedem Fall günstig, wenn das wenigstens eine verlagerbare Formschlussmittel aus einer Kontaktfläche heraus ragt und über eine Handhabe verstellbar ist, die an einer von der Kontaktfläche beabstandeten Seite angeordnet ist. Hierdurch das Trägerelement und die Lagerplatte besonders komfortabel miteinander verriegelt beziehungsweise entriegelt werden.

In den Figuren ist eine beispielhafte Ausführungsform der Erfindung dargestellt. Es zeigen:
- Figur 1: eine Ansicht einer erfindungsgemäßen Aktuatorvorrichtung im ein- gebauten Zustand,
- Figur 2: eine teilweise geschnittene Ansicht einer Steckverbindung der Aktu- atorvorrichtung gemäß Fig. 1 und
- Figur 3: eine perspektivische Ansicht der Aktuatorvorrichtung nach Fig. 1 im getrennten Zustand eines Trägerelementes von einer Lagerplatte.

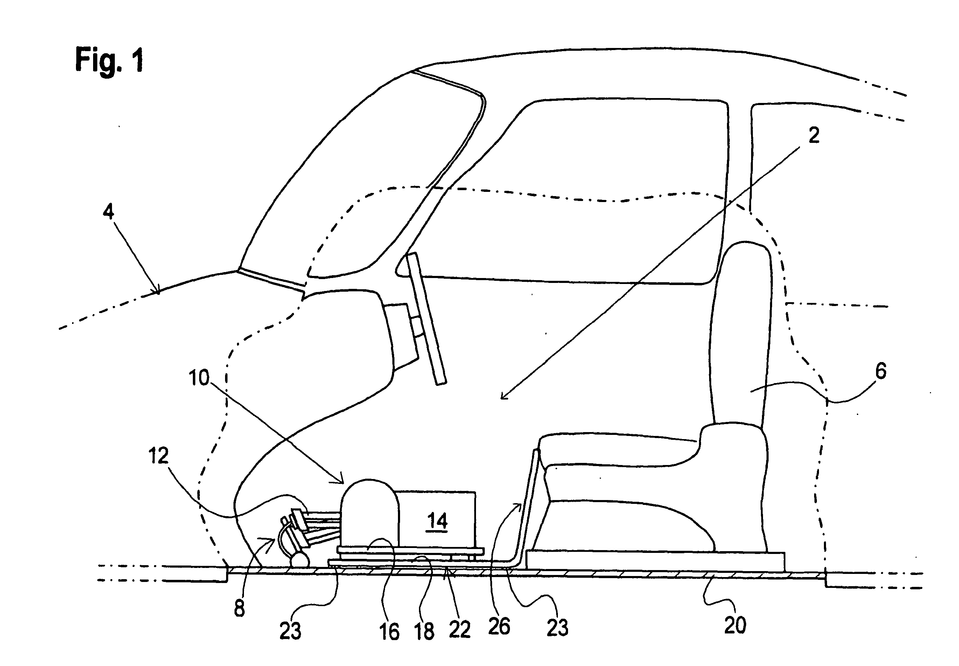

Fig. 1 zeigt den Fußraum 2 eines Fahrzeuges 4 zwischen einem Fahrersitz 6 und Pedalen 8. Zur Beaufschlagung dieser Pedale 8 im Rahmen eines Dauertests ist in den Fußraum 2 eine Aktuatorvorrichtung 10 eingesetzt. Diese weist beispielhaft zwei Betätigungselemente 12 auf, die mittels eines Antriebs 14 mit Stellmotor hin- und her bewegbar sind, um die Pedale 8 wiederkehrend mit einer Druckkraft zu beaufschlagen.

Die Betätigungselemente 12 und der Antrieb 14 sind dabei an einem plattenförmigen Trägerelement 16 gehalten, das wiederum über eine Lagerplatte 18 an einem Fahrzeugboden 20 gelagert ist. Die Lagerplatte 18 weist dabei einen Bodenabschnitt 22 auf, der direkt oder über beispielsweise rutschbewegungshemmende Elemente 23 am Fahrzeugboden 20 anliegt. Von diesem Bodenabschnitt 22 ragt ein Stützabschnitt 26 schräg nach oben ab, der an der von den Pedalen 8 abgewandten Seite der Aktuatorvorrichtung 8 am Fahrzeugsitz 6 anliegt.

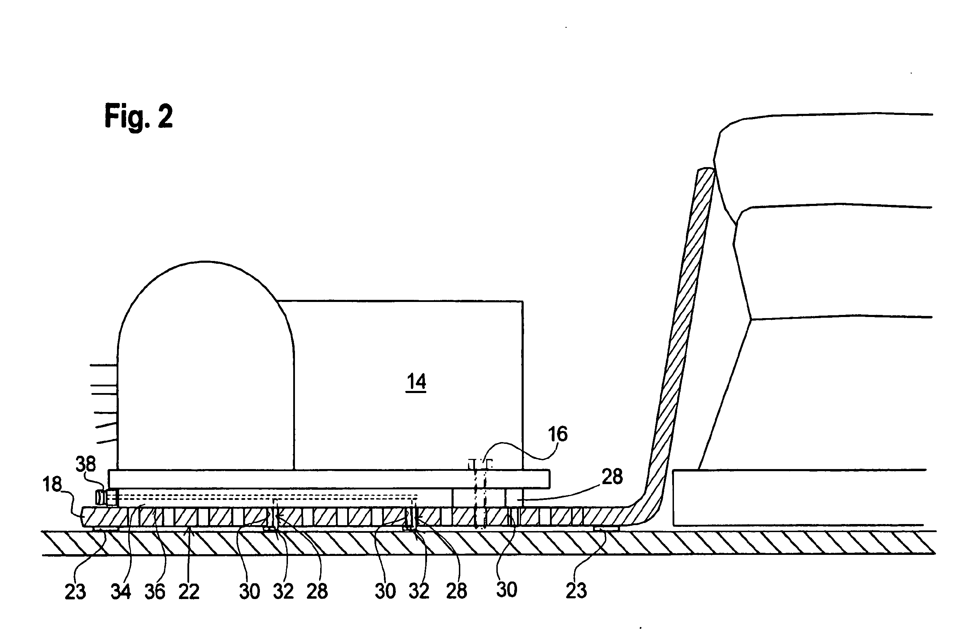

Wie insbesondere aus Fig. 2 zu entnehmen ist, ist das Trägerelement 16 über als zapfenförmige Steckmittel ausgebildete Formschlussmittel 28 mit der Lagerplatte 18 formschlüssig verbindbar. Die Lagerplatte 18 ist hierzu zumindest im Bodenabschnitt 22 als Lochblech ausgebildet und weist somit eine Vielzahl von Ausnehmungen in Form von Bohrungen auf, die als Formschlussgegenmittel 30 zur formschlüssigen Aufnahme der Formschlussmittel 28 fungieren.

Wie aus Fig. 2 ferner zu entnehmen ist, bilden die zapfenförmigen Formschlussmittel 28 teilweise ein hakenförmiges Ende 32 aus. Diese Formschlussmittel 28 mit hakenförmigem Ende 32 sind dabei an einer Schiebeeinrichtung 34 vorgesehen, die mit dem Trägerelement 16 fest verbunden ist und die eine Kontaktfläche 36 ausbildet, die an die Lagerplatte 18 anlegbar ist und aus der die hakenförmigen Formschlussmittel 28 heraus ragen. An einer von der Kontaktfläche 36 abgewandten Seite der Schiebeeinrichtung 34 ist dabei eine Handhabe 38 vorgesehen, über die die Formschlussmittel 28 mit hakenförmigem Ende 32 gegenüber dem Trägerelement 16 und der Lagerplatte 18 verschiebbar sind. Auf diese Weise sind die verschiebbaren Formschlussmittel 28 zwischen einer Freigabestellung, in der sie, wie durch strichpunktierte Linien dargestellt, im eingesteckten Zustand lediglich parallel zur Lagerplatte 18 formschlüssig mit dieser verbunden sind, und einer Verriegelungsstellung verlagerbar, in der sie im eingesteckten Zustand die Lagerplatte 18 hintergreifen und dadurch einen zusätzlichen Formschluss senkrecht zur Lagerplatte 18 bewirken.

Zur Montage der Aktuatorvorrichtung 10 im Fahrzeug 4 wird zunächst die Lagerplatte 18 getrennt von der übrigen Aktuatorvorrichtung 10 in den Fußraum 2 eingesetzt, wobei der Stützabschnitt 26, gemäß Fig. 1, mit dem Fahrersitz in Anlage gebracht wird.

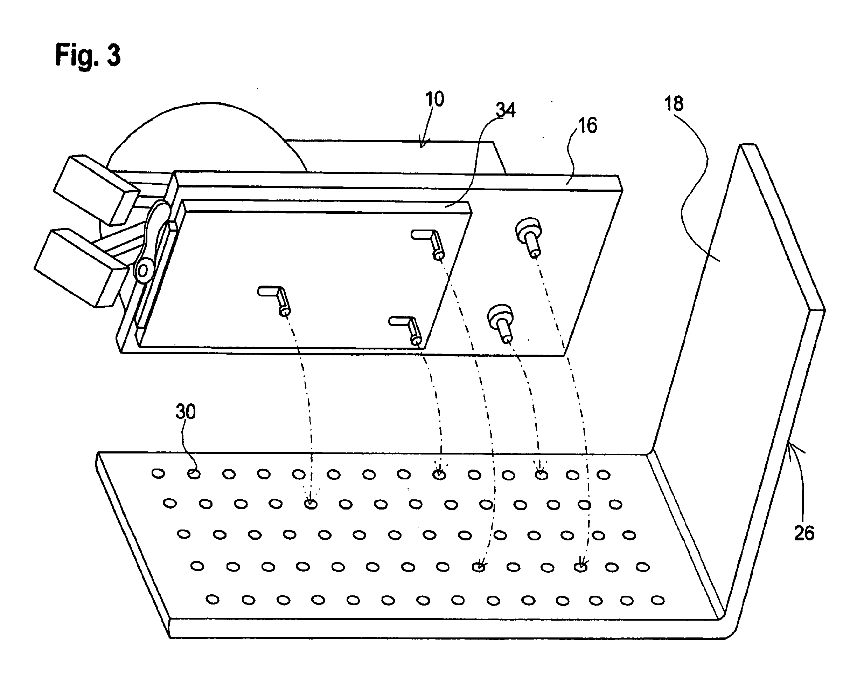

Anschließend wird das Trägerelement 16 unter Zwischenlage der Schiebeeinrichtung 34 auf die Lagerplatte 18 aufgesetzt, wie in Fig. 3 dargestellt. Durch die große Zahl an Ausnehmungen der Lagerplatte 18, die als Formschlussgegenmittel 30 fungieren, können die Formschlussmittel 28 in einer von mehreren möglichen Positionen in die entsprechenden Formschlussgegenmittel 30 eingesetzt werden, wodurch der Formschluss zwischen dem Trägerelement 16 und der Lagerplatte 18 in Richtung parallel zur Lagerplatte 18 hergestellt ist.

Durch anschließende Betätigung der Handhabe 38 werden dann die hakenförmigen Formschlussmittel 28 von der Freigabestellung in die in Fig. 2 durch strichpunktierte Linien dargestellte Verriegelungsstellung verlagert. Hierdurch wird der zusätzliche Formschluss senkrecht zur Lagerplatte 18 hergestellt, um im Betrieb der Aktuatorvorrichtung 10 ein Abheben des Trägerelementes 16 von der Lagerplatte 18 zu vermeiden.

Die Aktuatorvorrichtung 10 befindet sich somit in betriebsbereiter Stellung, in der die Beaufschlagung der Pedale 8 durch die Betätigungselemente 12, wie in Fig. 1 dargestellt, erfolgen kann.

## Patentansprüche

1. Aktuatorvorrichtung (10) zur Betätigung wenigstens eines Fußpedals (8) eines Kraftfahrzeuges (4)
mit wenigstens einem mittels eines Stellmotors (14) antreibbaren Betätigungselementes (12),
mit einem Trägerelement (16), an dem das wenigstens eine Betätigungselement (12) und der Stellmotor (14) gelagert sind und
mit Befestigungsmitteln für die Festlegung des Trägerelementes (16) an einem Fahrzeugboden (20),
**dadurch gekennzeichnet, dass** die Befestigungsmittel eine Lagerplatte (18) aufweisen, an der Formschlussgegenmittel (30) vorgesehen sind, die mit an dem Trägerelement (16) vorgesehenen Formschlussmittein (28) lösbar verbindbar sind.

2. Aktuatorvorrichtung nach Anspruch 1, **dadurch gekennzeichnet, dass** die Formschlussgegenmittel (30) in einer größeren Zahl vorgesehen sind als die Formschlussmittel (28) und die Formschlussmittel (28) in wenigstens zwei unterschiedlichen Positionen an den Formschlussgegenmitteln (30) festlegbar sind.

3. Aktuatorvorrichtung nach Anspruch 1 oder 2, **dadurch gekennzeichnet, dass** die Formschlussmittel (28) und Formschlussgegenmittel (30) durch Steckmittel und Gegensteckmittel einer Steckverbindung gebildet sind.

4. Aktuatorvorrichtung nach Anspruch 3, **dadurch gekennzeichnet, dass** die Steckmittel durch trägerelementseitige Zapfen und die Gegensteckmittel durch lagerplattenseitige Ausnehmungen gebildet sind, in denen die Zapfen aufnehmbar sind.

5. Aktuatorvorrichtung nach Anspruch 1 oder 2, **dadurch gekennzeichnet, dass** die Formschlussmittel (28) und Formschlussgegenmittel (30) durch Schraubmittel und Gegenschraubmittel einer Schraubverbindung gebildet sind.

6. Aktuatorvorrichtung nach Anspruch 5, **dadurch gekennzeichnet, dass** die Schraubmittel durch trägerelementseitige Gewindebolzen und die Gegenschraubmittel durch lagerplattenseitige Gewindebohrungen gebildet sind, in denen die Gewindebolzen aufnehmbar sind.

7. Aktuatorvorrichtung nach einem der Ansprüche 1 bis 6, **dadurch gekennzeichnet, dass** die Lagerplatte (18) wenigstens bereichsweise durch ein Lochblech gebildet ist.

8. Aktuatorvorrichtung nach einem der Ansprüche 1 bis 7, **dadurch gekennzeichnet, dass** die Aktuatorvorrichtung (10) in ihren Außenabmessungen derart begrenzt ist, dass sie in den Fußraum (2) zwischen Fahrersitz (6) und Fußpedalen (8) eines handelsüblichen Kraftfahrzeuges (4) einsetzbar ist.

9. Aktuatorvorrichtung nach Anspruch 8, **dadurch gekennzeichnet, dass** die Lagerplatte (18) einen Bodenabschnitt (22) für die Ablage auf dem Fahrzeugboden (20) und einen Stützabschnitt (26) für die Anlage an einem Fahrzeugsitz (6) aufweist, wobei der Stützabschnitt (26) quer zum Bodenabschnitt (22) schräg nach oben von diesem abragt.

10. Aktuatorvorrichtung nach einem der Ansprüche 3 bis 9, **dadurch gekennzeichnet, dass** die Formschlussmittel (28) wenigstens teilweise hakenförmig ausgebildet sind, um die Formschlussgegenmittel (30) zu hintergreifen.

11. Aktuatorvorrichtung nach Anspruch 10, **dadurch gekennzeichnet, dass** wenigstens ein hakenförmiges Formschlussmittel (28) am Trägerelement (16) oder an der Lagerplatte (18) verlagerbar gehalten ist.

12. Aktuatorvorrichtung nach Anspruch 10, **dadurch gekennzeichnet, dass** das wenigstens ein verlagerbares Formschlussmittel (28) aus einer Kontaktfläche (36) heraus ragt und über eine Handhabe (38) verstellbar ist, die an einer von der Kontaktfläche (36) beabstandeten Seite angeordnet ist.

## Claims

1. Actuating device (10) for actuating at least one foot pedal (8) of a motor vehicle (4) with at least one actuating element (12) driven by a servomotor (14),
with a carrier element (16) at which the at least one actuating element (12) and the servomotor (14) are supported and
with fastening units for fixing the carrier element (16) to a vehicle base (20),
**characterised in that** the fastening units exhibit a bearing plate (18) at which counter closure units (30) are provided, said counter closure units (30) being detachably connected with closure units (28) that are provided at the carrier element (16).

2. Actuating device according to claim 1, **characterised in that** the counter closure units (30) are provided in greater numbers than the closure units (28) and the closure units (28) are attachable to the counter closure units (30) in at least two different positions.

3. Actuating device according to claim 1 or 2, **characterised in that** the closure units (28) and counter closure units (30) are formed by plug units and counter plug units of a plug connection.

4. Actuating device according to claim 3, **characterised in that** the plug units are formed by pins on the carrier element side and the counter plug units are formed by recesses on the bearing plate side, the pins being received into said recesses.

5. Actuating device according to claim 1 or 2, **characterised in that** the closure units (28) and counter closure units (30) are formed by screwing units and counter screwing units of a screw connection.

6. Actuating device according to claim 5, **characterised in that** the screwing units are formed by threaded bolts on the carrier element side and the counter screwing units are formed by threaded holes on the bearing plate side, said threaded holes receiving the threaded bolts.

7. Actuating device according to any one of the claims 1 to 6, **characterised in that** the bearing plate (18) is, at least in certain areas, formed by a perforated sheet.

8. Actuating device according to any one of the claims 1 to 7, **characterised in that** the actuating device (10) is limited in its external dimensions such that it can be inserted into the foot well (2) between the driver's seat (6) and foot pedals (8) of a commercially available motor vehicle (4).

9. Actuating device according to claim 8, **characterised in that** the bearing plate (18) exhibits a base section (22) for placing onto the vehicle base (20) and a supporting section (26) for resting against a driver's seat (6), wherein the supporting section (26) projects, transversal to the base section (22), diagonally upwards and away from it.

10. Actuating device according to any one of the claims 3 to 9, **characterised in that** the closure units (28) are at least partly hook-shaped, in order to reach behind the counter closure units (30).

11. Actuating device according to claim 10, **characterised in that** at least one hook-shaped closure unit (28) is relocatably held at the carrier element (16) or at the bearing plate (18).

12. Actuating device according to claim 10, **characterised in that** the at least one relocatable closure unit (28) projects from a contact surface (36) and is adjustable via a handle (38) which is arranged on a side that is distant from the contact surface (36).

## Revendications

1. Dispositif actionneur (10) pour actionner au moins une pédale à pied (8) d'un véhicule automobile (4) comprenant
au moins un élément d'actionnement (12) pouvant être commandé au moyen d'un servomoteur (14),
un élément support (16) sur lequel l'au moins un élément d'actionnement (12) et le servomoteur (14) sont montés et
des moyens de fixation pour la fixation de l'élément support (16) à un sol de véhicule (20),
**caractérisé en ce que** les moyens de fixation présentent une plaque de montage (18) sur laquelle sont prévus des moyens opposés de liaison par formes conjuguées (30) qui peuvent être reliés de façon amovible à des moyens de liaison par formes conjuguées (28) prévus sur l'élément support (16).

2. Dispositif actionneur selon la revendication 1, **caractérisé en ce que** les moyens opposés de liaison par formes conjuguées (30) sont prévus dans un nombre plus important que les moyens de liaison par formes conjuguées (28), et les moyens de liaison par formes conjuguées (28) peuvent être fixés aux moyens opposés de liaison par formes conjuguées (30) dans au moins deux positions différentes.

3. Dispositif actionneur selon la revendication 1 ou 2, **caractérisé en ce que** les moyens de liaison par formes conjuguées (28) et les moyens opposés de liaison par formes conjuguées (30) sont formés par des moyens fiche mâle et des moyens fiche femelle d'une liaison par enfichage.

4. Dispositif actionneur selon la revendication 3, **caractérisé en ce que** les moyens fiche mâle sont formés par des broches côté élément support et les moyens fiche femelle sont formés par des évidements côté plaque de montage, dans lesquels les broches peuvent être reçues.

5. Dispositif actionneur selon la revendication 1 ou 2, **caractérisé en ce que** les moyens de liaison par formes conjuguées (28) et les moyens opposés de liaison par formes conjuguées (30) sont formés par des moyens vis et des moyens écrou d'une liaison par vissage.

6. Dispositif actionneur selon la revendication 5, **caractérisé en ce que** les moyens vis sont formés par des goujons filetés côté élément support et les moyens écrou sont formés par des trous filetés côté plaque de montage, dans lesquels les goujons filetés peuvent être reçus.

7. Dispositif actionneur selon l'une quelconque des revendications 1 à 6, **caractérisé en ce que** la plaque de montage (18) est formée au moins sur certaines zones par une tôle à trous.

8. Dispositif actionneur selon l'une quelconque des revendications 1 à 7, **caractérisé en ce que** le dispositif actionneur (10) est délimité dans ses dimensions extérieures de façon qu'il puisse être inséré dans l'espace pour les pieds (2) entre le siège conducteur (6) et les pédales à pied (8) d'un véhicule automobile (4) courant.

9. Dispositif actionneur selon la revendication 8, **caractérisé en ce que** la plaque de montage (18) présente un tronçon sol (22) pour la pose sur le sol du véhicule (20), et un tronçon d'appui (26) pour s'appliquer sur un siège d'automobile (6), le tronçon d'appui (26) se dressant vers le haut, incliné, et transversalement au tronçon sol en partant de celui-ci.

10. Dispositif actionneur selon l'une quelconque des revendications 3 à 9,
**caractérisé en ce que** les moyens de liaison par formes conjuguées (28) sont au moins partiellement configurés en forme de crochet, afin de s'accrocher derrière les moyens opposés de liaison par formes conjuguées (30).

11. Dispositif actionneur selon la revendication 10, **caractérisé en ce qu'**au moins un moyen de liaison par formes conjuguées (28) en forme de crochet est maintenu déplaçable sur l'élément support (16) ou sur la plaque de montage (18).

12. Dispositif actionneur selon la revendication 10, **caractérisé en ce que**
l'au moins un moyen de liaison par formes conjuguées (28) déplaçable se dresse à partir d'une surface de contact (36) et est réglable par l'intermédiaire d'une manette (38) qui est agencée sur un côté espacé de la surface de contact (36).
